# EUROPEAN PATENT APPLICATION

(11) **EP 1 760 386 A1**
(43) Date of publication of application: **07.03.2007**
(21) Application number: 05425616.9
(22) Date of filing: 02.09.2005
(51) Int. Cl.: F16M 11/08, F16M 11/10, F16M 11/12

(54) **A support device for regulating a position of a flat screen**

(71) Applicant: Euro Elettronica Srl., 42100 Reggio Emilia (IT)
(72) Inventor: Magnani, Giuliano, 42025 Cavriago (RE) (IT); Paganuzzi, Valerio, 42015 Correggio (RE) (IT); Bonardi, Alex, 42100 Reggio Emilia (IT)
(74) Representative: Gotra, Stefano

(57) **Abstract**

The device comprises a rest platform (3) for allowing a positioning of the screen (2) on a horizontal plane, from which rest platform (3) a fork body (4) develops, having a preferably vertical development. An anchoring body (5), rotatingly connected to the fork body (4), associated to a back of the screen (2), exhibiting a development direction along a horizontal axis X-X. Elastic contrast means (3), inferiorly jointed on the rest platform (3) and superiorly inserted on the anchoring platform (5), are able to react to a push exerted on the screen (2) and to a consequent rotation of the screen (2) about the axis X-X.

## Description

Flat screens include plasma screens, liquid crystal displays and all flat screens that are slim in depth with respect to the image area base.

These screens are used both at the workplace, associated to personal computers, and in private places, as television screens, but are rapidly substituting cathode ray tube screens in public places, such as for example libraries, where they are used for archive searches, or airports and/or stations for displaying departure and/or arrival timetable schedules.

To achieve the best possible picture resolution the spectator should be advised to position him or herself frontally of the screen so that his or her gaze is directed perpendicularly towards the centre of the screen.

Consequently whether the spectator is standing, as for example in an airport, or sitting, as for example in the workplace before his or her p.c., the same advice is relevant, i.e. that the person watching the screen should have his or her vision perpendicular to the centre of the screen.

To facilitate finding the correct viewing position, regulation devices both for height and inclination of the screen have been devised, to enable a user to customise the parameters on the basis of his or her own needs.

The prior art teaches, for example, connecting the screen to a hinged arm which enables the height of the screen to be varied with respect to the rest plane.

Such devices, widely used for screens hung on walls or ceilings, are too unwieldy for work positions where the screens rest on a horizontal plane.

The same devices further exhibit, as a further drawback, the need to be properly anchored by means of holes and connecting screws.

A further example of prior art includes use of a pivot, with a horizontally oriented axis, connected to the back of the screen and rotationally connected to a fork.

The pivot rotation of the fork is achieved in two ways.

In a first way, the pivot and fork exhibit, respectively, a cogging on the external diametric portions, and a cogging connected to the previous cogging on respective seatings.

An elastic collar is interposed between the two coggings to encourage rotation thereof in one direction or another.

In a second way, the ends of the pivot are rotationally coupled to the arms of the fork and a torsion spring exhibits an end which is connected to the pivot and an opposite end which is connected to the arm of the fork.

The first way is not widespread on the market because the step-movement of the screen due to the interaction of the pair of coggings is not attractive to the user.

The second way, preferred to the first, apart from having high production costs, also has the drawback of being less reliable over time, and possibly requiring laborious maintenance work.

For example, in the case of a breakage of the elastic body, the most active component and most susceptible to fatigue, the replacement of the part obliges the operative completely to replace the pivot-fork assembly, if the spring is totally integrated as part of the assembly, or to undertake long and complex dismounting operations.

In a third example of prior art, a support, connected to the screen, is hinged on two coaxial hinges, arranged at opposite sides, an adjustable friction device being provided on each of the two hinges, which friction device is constituted by a multiplicity of washers enclosed between a bolt and a flat spring.

The last example of the prior art has the drawback of not balancing the weight of the screen in relation to the extreme inclination positions.

If the screen is positioned with the centre of gravity displaced away from the pivot of the hinge, in order to stabilise the support the friction has to be tightened right up to the limit, acting on the bolts; this is a hard and unpleasant adjustment manoeuvre.

The hardness of this task could even be excessive in a case in which the centre of gravity were in proximity of the rotation axis.

The main aim of the present invention is to provide a device for moving a screen which enables gentle and continuous rotations about a horizontal axis and a vertical axis.

The second aim of the present invention is to provide a device that is reliable over time.

A further aim of the invention is to realise a device for moving a screen which is easy to assemble and rapidly dismountable.

These aims and advantages and more besides are all attained by the invention as it is characterised in the claims that follow.

Further characteristics and advantages of the present invention will better appear from the detailed description that follows of a preferred but non-exclusive embodiment of the invention, illustrated purely by way of a nonlimiting example in the accompanying figures of the drawings, in which:
Figure 1 is an exploded view of the components defining the device for regulating the position of a flat screen;
Figure 2 is a partly-sectioned perspective view of the back of the invention;
Figure 3 is a sectioned view of the device with the screen applied thereto, when the screen is in the median position with respect to the run limits thereof;
Figure 4 is a sectioned view of the device with the screen applied thereto when the screen is in an inclined limit position;

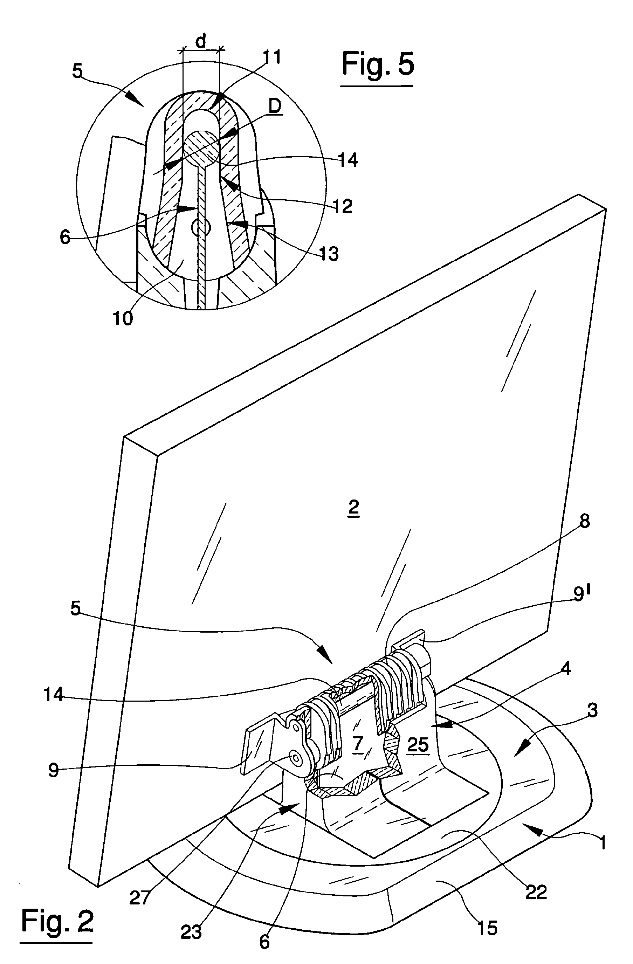

Figure 5 is a sectioned view of a constructional detail of the device.

With reference to the figures, 1 denotes in its entirety a device for moving a flat screen 2.

The device 1 includes a rest platform 3, for locating the screen 2 on a horizontal plane, from which a fork body 4 develops, which fork body 4 is rotationally coupled with an anchoring body 5, the latter being associated to the back of the screen 2 and exhibiting a preferably horizontal development direction along an axis X-X.

The platform 3 and the anchoring body 5 are reciprocally interactive via means for contrasting 6 inferiorly jointed to the platform 3 and superiorly inserted in the anchoring body 5.

The elastic means for contrasting 6, which can react to a force applied on the screen 2 the corresponding rotation of the screen about the axis X-X, are defined by a laminar body 7, preferably quadrangular.

The laminar body 7 can vary in height, which should be about equal to a distance between the anchoring body 5 and the platform 3, and has a variable base according to the weight of the screen 2.

The anchoring body 5 is defined by an ovoid body 8.

At the ends of the ovoid body 8 are, respectively, a first and a second pivot 27, 27', coupled to arms of the fork body 4, and a first and a second anchoring plate 9, 9'.

While the pivots 27, 27' enable a rotational connection between the anchoring body 5 and the fork body 4, the plates 9, 9' enable rotation solidarity of the screen 2 and the anchoring body 5.

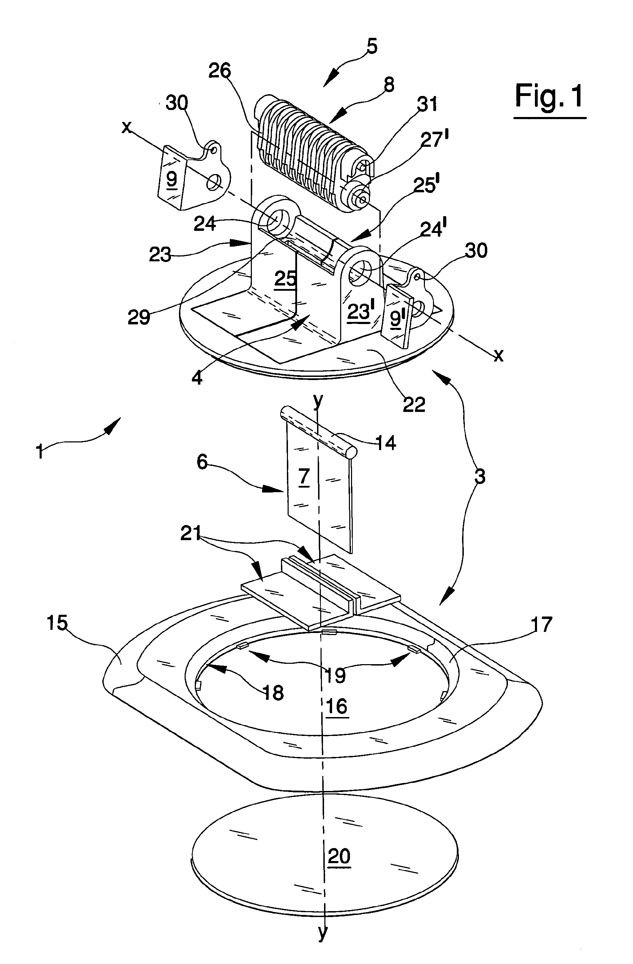

As can be seen in figure 1, each anchoring plate 9, 9' exhibits a hole 30 coupled with a pin 31 which pin is solid to the anchoring body 5.

The conformation is preferred as it gives the device good flexibility of use, with only the anchoring plates 9, 9' changing according to the screen type and model, and not the entire anchoring body 5.

The anchoring body 5 and the plates 9, 9' can be made in a single body without forsaking the ambit of the present invention.

The anchoring body 5 inferiorly includes a longitudinal split centre 10 which can internally house, via contact coupling, the upper portion of the elastic contrast means 6.

In transversal section the split centre 10 exhibits an outline shape which includes a semi-circular section 11, an intermediate first tract 12 and a final second tract 13.

The first semicircular portion 11, located at the top of the split centre 10, exhibits a diameter d and proceeds with the intermediate first tract 12, defined by two parallel semi-tracts with diameter d.

The intermediate first tract 12 proceeds with the second final tract 13, which terminates the split centre 10, which second final tract 13 is defined by two semi-tracts which, starting from the first tract 12, progressively diverge.

The contact coupling between the upper portion of the elastic contrast means 6 and the split centre 10 is obtained via a cylinder 14, solid to the upper edge of the laminar body 7 and exhibiting a diameter D which is equal to the diameter d of the split centre 10.

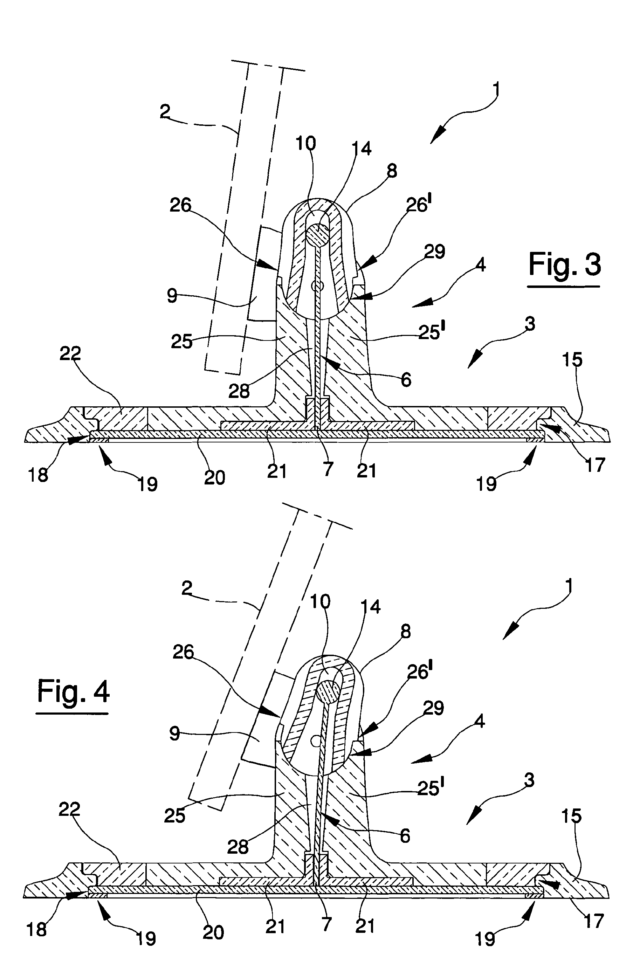

As can be seen in figures 3 and 4, at least a first and at least a second projection 26, 26' are exhibited on the lateral wall of the anchoring body 5 on the side facing the screen 2 and the opposite side. The two projections 26 and 26' define end-run stops to rotation of the screen 2 about the axis X-X.

The rest platform 3 exhibits a plate-shaped base 15 having a circular central cavity 16.

The cavity 16, crossing the base 15 from bottom to top thereof, exhibits a shoulder 17 and below the shoulder 17 an increase in section 18 terminating at the base of the cavity 16.

The bottom of the cavity 16 is closed by a bottom plate 20 inferiorly striking the shoulder 17 and rotatably coupled with the broadening of section 18 by a coupling with play.

The coupling with play can, for example, be obtained by a plurality of tabs 19, located on the lower edge of the cavity 16 and allowing positioning of the bottom plate 20 strikingly respectively on the shoulder and on the plurality of tabs 19, while at the same time allowing rotation thereof internally of the broadening of section 18.

A pair of right-angled L-shaped brackets 21 are located on the bottom plate 20.

The pair of brackets 21 is arranged so that one is opposite the other, and each exhibits a longer side thereof resting on the bottom plate 20 and the shorter side thereof facing the shorter side of the other bracket 21.

This arrangement means the respective shorter sides of the brackets 21 invite and receive the lower portion of the elastic contrast means 6.

To centre the two brackets 21 two quadrangular recesses can be made in the top of the bottom plate 20 for housing the longer side of each bracket 21.

A cover plate 22 is present on the top of the cavity 16, resting superiorly on the shoulder 17.

The cover plate 22, which constitutes a structural element of the rest platform 3, can, alternatively to the base plate 20, function as a centring and containing body for the pair of brackets 21.

The cover plate 22 and the bottom plate 20 are reciprocally solidly constrained and rotatable with respect to the base 15 about a vertical axis Y-Y central of the cavity 16.

Screws can be used to solidly constrain the bottom plate to the cover plate 22.

The fork body 4 develops vertically from the cover plate 22; the fork body 4 is solidly constrained to the cover plate 22 and is defined by a first arm 23 and a second arm 23', each terminating respectively in a first eyelet 24 and a second eyelet 24', centres of which define the axis X-X.

For reasons connected with assembly, the fork body 4 is subdivided into two symmetrical parts.

In a further embodiment, not illustrated in the accompanying figures of the drawings, each eyelet 24, 24' is constituted by an upper part screwed into the lower base, which enables an adjustment of the rotating friction with respect to the pivots 27, 27' acting on the closing screws.

The first and second arm 23, 23' are connected to one another by a pair of lateral walls 25, 25' enveloping the elastic contrast means 6.

The first and second eyelets 24, 24' allow rotational coupling with the anchoring body 5, being couplable with the respective couple of pivots 27, 27' present on the anchoring body 5.

The pair of lateral walls 25, 25' define internally thereof a recess 28 defining a deforming space for the elastic contrast means 6.

The recess 28 is superiorly intersected by a cylindrical cradle 29 which acts as a rest for the lower portion of the anchoring body 5.

During rotation of the anchoring body 5, the first and second projections 26, 26' on the anchoring body 5 alternatively contact the right and left upper ends of the pair of lateral walls 25, 25', at the apices of the cradle 29, each thus acting as end-run stops of the rotation of the screen 2.

The device functions as follows.

The weight of the screen 2, whatever its position, is supported in part by the cradle 29 and in part by the pair of eyelets 24, 24' on which the anchoring body 5 acts.

The imbalance created by the screen 2 with respect to the rotation axis X-X, as can be seen in figure 4, is balanced by a couple of reactions constituted by an elastic component, generated by the contrast means 6, to which is added a friction couple.

The friction couple is made up by the dragging between the cylinder 14 and the split centre 10, and also by the rotation dragging of the pair of pivots 27, 27' in the eyelets 24, 24', and by the lower portion of the anchoring body 5 on the cradle 29.

The device of the invention, apart from favouring a rotation of the screen that is even gentler than a usual device using a torsion spring, is easily dismountable when a part is to be replaced.

Following, for example, a dismounting operation caused by breakage of the elastic contrast means 6, to replace the means it is sufficient to separate the cover plate 22 from the bottom plate 20 in order to gain immediate access to the laminar body 7.

## Claims

1. A support device for regulating a position of a flat screen (2), comprising:
a rest platform (3) for allowing a positioning of the screen (2) on a horizontal plane, from which rest platform (3) a fork body (4) develops, having a preferably vertical development;
an anchoring body (5), rotatingly connected to the fork body (4), associated to a back of the screen (2), exhibiting a development direction along a horizontal axis X-X;
**characterised in that** it comprises elastic contrast means (3), inferiorly jointed on the rest platform (3) and superiorly inserted on the anchoring platform (5), able to react to a push exerted on the screen (2) and to a consequent rotation of the screen (2) about the axis X-X.

2. The device of claim 1, **characterised in that** the elastic contrast means (6) are defined by a laminar body (7).

3. The device of claim 1, **characterised in that** the anchoring body (5) is defined by an ovoid body (8) exhibiting at two ends thereof respectively a first and a second anchoring plate (9, 9') which solidly constrain the anchoring body (5) to the screen (2), and inferiorly provided with a split centre (10) housing internally thereof, with a contact coupling, an upper portion of the elastic contrast means (6).

4. The device of claim 3, **characterised in that** the split centre (10) exhibits a transversal section having an outline comprising:
a semicircular portion (11) located at a top of the split centre (10) and having a diameter d;
an intermediate first tract (12) connected to the semicircular portion (11) and defined by two semi-tracts which are parallel and have a diameter d;
a second tract (13), connected to the intermediate first tract (12) and being defined by two diverging semi-tracts and having a diameter which is larger than diameter d.

5. The device of claim 2, **characterised in that** the laminar body (7) terminates at a top thereof with a cylinder (14) having a diameter D, which cylinder (14) is solidly constrained to the upper side of the laminar body (7).

6. The device of claim 5 or 4, **characterised in that** the diameter D of the cylinder (14) is equal to the diameter d of the semicircular portion, the cylinder (14) being in contact, in the split centre (10), with the intermediate first tract (12).

7. The device of claim 1, **characterised in that** the rest platform (3) comprises:
a plate-shaped base (15) having a circular central cavity (16) provided with a shoulder (17) and exhibiting inferiorly thereof a broadening of section (18) terminating on a bottom of the cavity (16);
a bottom plate (20), inferiorly closing the central cavity (16), rotatably coupled to the base (15) at the broadening of section;
a pair of brackets (21) having an L-shaped transversal section, which brackets are located in opposite positions to one another and each of which exhibits a longer side thereof resting on the bottom plate (20) and a shorter side thereof intercepting the elastic contrast means (6), each shorter side thereof striking against the elastic contrast means (6);
a cover plate (22), superiorly closing the central cavity (16) and resting on the shoulder (17), from which cover plate (22) the fork body (4) develops, which fork body (4) is defined by a first and a second arm (23, 23'), the first and second arms (23, 23') terminating respectively in a first and a second eyelet (24, 24') to enable rotational connection with the anchoring body (5), which first and second arms (23, 23') are connected to one another by means of a pair of lateral walls (25, 25') which envelop the elastic contrast means (6).

8. The device of claim 7, **characterised in that** the anchoring body (5) exhibits, on a side thereof facing the screen (2) and on an opposite side, at least a first and at least a second projection (26, 26') which can strike on the respective lateral wall (25, 25') facing the projection, defining end-run strikers for rotation of the screen (2) about the axis (X-X).

9. The device of claim 7, **characterised in that** the anchoring body (5) exhibits on diametric bases thereof a pair of pivots (27, 27') couplable with the first and second eyelet (24, 24').

10. The device of claim 7, **characterised in that** the bottom plate (20) and the cover plate (22) are reciprocally solidly constrained and rotatable, with respect to the base (15), about a vertical axis (Y-Y) central of the cavity (16) afforded in the base (15).

11. The device of claim 7, **characterised in that** the pair of lateral walls (25, 25') comprise internally thereof a recess (28) for containing the deformations of the elastic contrast means (6), superiorly intersected by a cylindrical rest cradle (29) for the anchoring body (5).
